# EUROPEAN PATENT SPECIFICATION

(11) **EP 4 579 386 B1**
(45) Date of publication and mention of the grant of the patent: **17.06.2026**
(21) Application number: 24219541.0
(22) Date of filing: 12.12.2024
(51) Int. Cl.: G06F 1/16, H04M 1/02

(54) **ELECTRONIC DEVICE**
ELEKTRONISCHE VORRICHTUNG
DISPOSITIF ÉLECTRONIQUE

(30) Priority: 26.12.2023 CN 202311811658
(43) Date of publication of application: 02.07.2025
(73) Proprietor: Getac Technology Corporation, New Taipei City 221009 (TW)
(72) Inventor: LEE, Kun-Cheng, Taipei City 11568 (TW)
(74) Representative: Lucke, Andreas

(56) References cited:
- US-A1- 2006 160 585
- US-A1- 2018 358 795
- US-A1- 2023 029 875

## Description

### BACKGROUND

### Technical Field

The present disclosure relates to an electronic device, and more particularly, to an electronic device that can be used with cables.

### Description of Related Art

Currently existing notebook computers generally include a host body and a display that can be flipped each other. For cables connected between the host body and the display, a through hole is usually designed on the upper housing of the host body to allow the cables to pass through and enter the interior of the host body. However, the way of passing the cables through the through hole of the upper housing requires a large configuration space, and the planning and utilization of the internal space of the host body is not ideal. In addition, due to internal space limitations, the through hole cannot be large enough to allow all types of cables to pass through at any angle. Therefore, when threading larger-sized cables, a user must first fold the connector at a distal end of the cables relative to the body of the cables and then squeeze it through the through hole. There is a risk of cable damage in this way. Furthermore, the cables at the threading point will be stacked/interlaced and messy, which can easily lead to assembly defects such as assembly crimping, misaligning, upper housing bulging, and etc.

Accordingly, how to provide an electronic device to solve the foregoing problems becomes an important issue to be solved by those in the industry.

US 2018/358795 A1 discloses an electronic device that includes a support frame, an electronic unit and a cable. The support frame includes a frame body and a first cable management unit. The frame body has a cable management recess and a cable management hole, wherein the cable management recess communicates with the cable management hole. The first cable management unit is connected to the frame body and rotatably located in the cable management recess. The electronic unit is disposed on the frame body. The cable has a first end and a second end opposite to the first end. The first end is connected to the electronic unit and the second end passes through the cable management hole to enter the cable management recess. The first cable management unit limits the cable in the cable management recess. When the cable is pulled to move, the first cable management unit rotates along with the cable.

US 2006/160585 A1 discloses a mobile phone provided with an upper housing coupled to a lower housing with free opening/closing via a hinge. A board housing recess is formed on the front face of a middle casing of the lower housing and an antenna housing recess is formed on the back face. The board housing recess houses a circuit board and the antenna housing recess houses an antenna. The board housing recess is covered with a front casing and the antenna housing recess is covered with a back casing. The edge of a keypad also serving as a watertight packing is inserted between the middle casing and front casing along the edge of the board housing recess. The edge of a watertight packing is inserted between the middle casing and back casing along the edge of the antenna housing recess.

US 2023/0029875 A1 discloses an information handling system supporting multi-radio and multi-antenna wireless communication by routing coaxial cables between the radios and antennas through a cable clip of a conductive material coupled to system ground and interfaced with the coaxial cable ground sheath through an opening formed in the coaxial cable outer casing. Current source of the radio-frequency applies a current in phase with a radio signal to the coaxial cable outer casing to suppress crosstalk with coated cables of different frequencies.

### SUMMARY

An aspect of the disclosure is to provide an electronic device to solve the foregoing problems.

According to the invention claimed herein, an electronic device is used with a plurality of cables. The electronic device includes a first component and a second component. The first component includes a first housing and a second housing connected to each other. An accommodation space is formed between the first housing and the second housing. An opening is formed at a junction of an edge of the first housing and the second housing. The second component is connected to the first component. The opening is configured for the cables to pass through so that the cables enter the accommodation space. Two ends of the cables are respectively connected to electronic components inside the first component and to electronic components inside the second component for signal and/or power transmission.

In one or more embodiments of the present disclosure, the electronic device further includes a plurality of a plurality of cable management structures. The cable management structures are disposed in the opening and configured to be respectively connected to the cables.

In one or more embodiments of the present disclosure, the cable management structures are disposed on the edge of the first housing.

In one or more embodiments of the present disclosure, the cable management structures are sequentially arranged along the edge of the first housing.

In one or more embodiments of the present disclosure, the edge of the first housing has a recess. The recess defines a part of an outline of the opening. The cable management structures are located in the recess.

In one or more embodiments of the present disclosure, the second housing includes a sidewall. The opening is formed at a junction of the edge of the first housing and the sidewall.

In one or more embodiments of the present disclosure, a top surface of the sidewall has a recess. The recess defines a part of an outline of the opening.

In one or more embodiments of the present disclosure, the electronic device further includes a cover. The cover covers the opening. An outer wall surface of the sidewall has a recess. The cover has a fixing portion. The fixing portion is fixed to the sidewall in the recess.

In one or more embodiments of the present disclosure, a surface of the fixing portion is substantially flush with the outer wall surface.

In one or more embodiments of the present disclosure, the electronic device further includes a hinge device and a cover. The first component and the second component are connected to each other through the hinge device. The cover covers the hinge device and the opening.

In any of the embodiments described above, the first component may be a host body, the second component may be a display, and the electronic device comprises said plurality of cables. The host body includes said first housing and said second housing connected to each other. An accommodation space is formed between the first housing and the second housing. An opening is formed at a junction of an edge of the first housing and the second housing. The display is connected to the host body. The opening is configured for the cables to pass through so that the cables enter the accommodation space.

Accordingly, in the electronic device of the present disclosure, the opening for the cables to pass through is provided at the junction of the edge of the first housing and the second housing. That is, the opening is formed on the edge of the first housing and can be formed when the first housing and the second housing are assembled. In this way, the planning and utilization in the accommodation space and of the first housing can be effectively improved. In addition, during assembly, in order to allow the cables to enter the accommodation space between the first housing and the second housing, the cables can be first abutted against the opening formed on the edge of the first housing, and then the first housing and the second housing are assembled. In this way, cables of various sizes can enter into the accommodation space without being folded, thereby effectively reducing the risk of cable damage. In addition, the cable management structures provided in the opening can neatly and fixedly arrange the cables to avoid the clutter of stacking/interlacing of the cables, thereby preventing assembly defects such as assembly crimping, misaligning, upper housing bulging, and etc.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
Fig. 1 is a perspective view of an electronic device according to an embodiment of the present disclosure;
Fig. 2 is a partial perspective view of the electronic device in Fig. 1;
Fig. 3 is another partial perspective view of the electronic device in Fig. 1, in which a cover is removed;
Fig. 4 is a top view of a first component in Fig. 1; and
Fig. 5 is a partial cross-sectional view of the first component in Fig. 3 taken along a cutting line 5-5.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts. However, specific structural and functional details disclosed herein are merely representative for purposes of describing example embodiments, and thus may be embodied in many alternate forms and should not be construed as limited to only example embodiments set forth herein. Therefore, it should be understood that there is no intent to limit example embodiments to the particular forms disclosed, but on the contrary, example embodiments are to cover all modifications, equivalents, and alternatives falling within the scope of the claims.

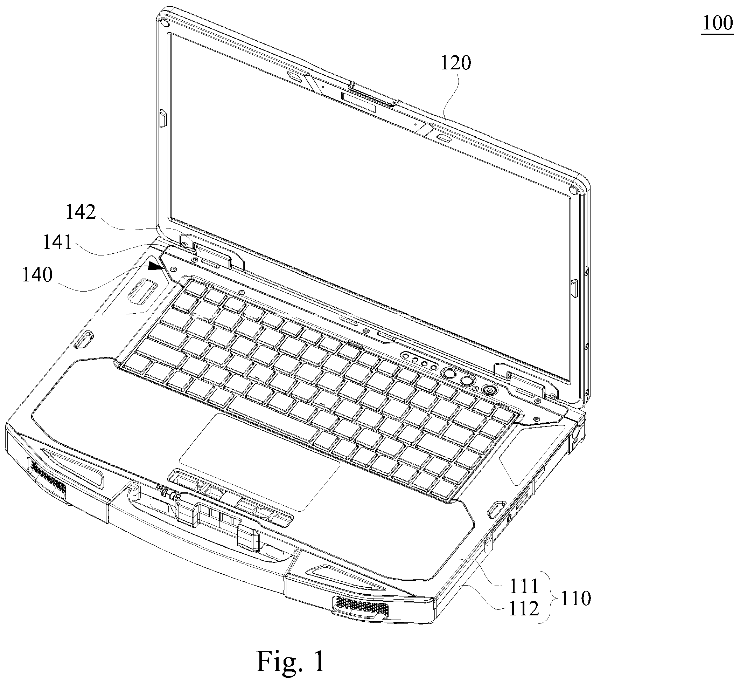

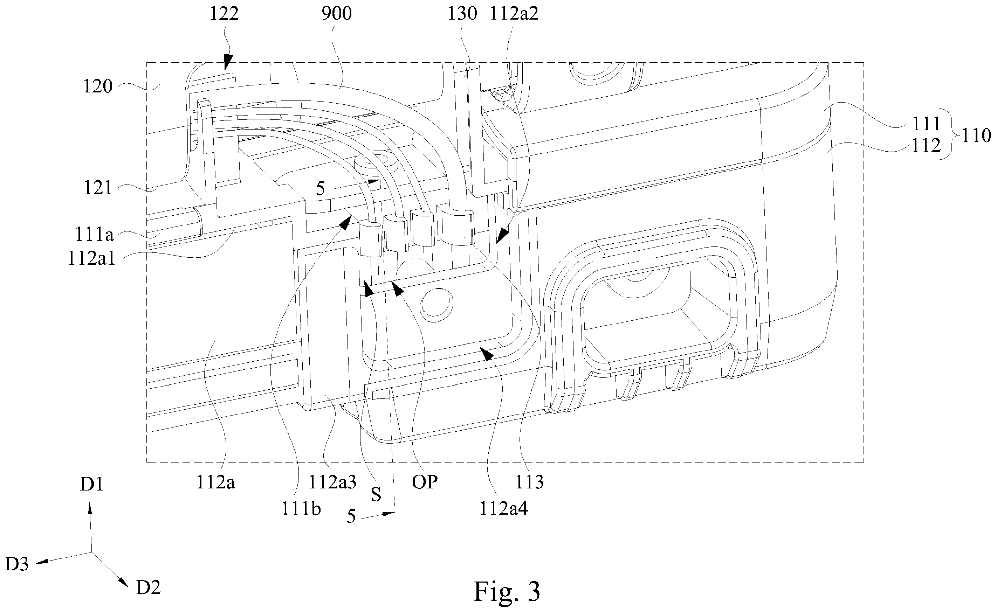

In the following description, although numerous features may be designated as optional, it is nevertheless acknowledged that all features defined by claim 1 are not to be read as optional. Reference is made to Fig. 1. Fig. 1 is a perspective view of an electronic device 100 according to an embodiment of the present disclosure. As shown in Fig. 1, the electronic device 100 includes a first component 110, a second component 120, a hinge device 130 (see Fig. 3), and a cover 140. The electronic device 100 takes a notebook computer as an example, in which the first component 110 can be a host body (with a keyboard device mounted thereon), and the second component 120 can be a display, but the present disclosure is not limited thereto. In practical applications, the electronic device 100 may be other types of electronic products.

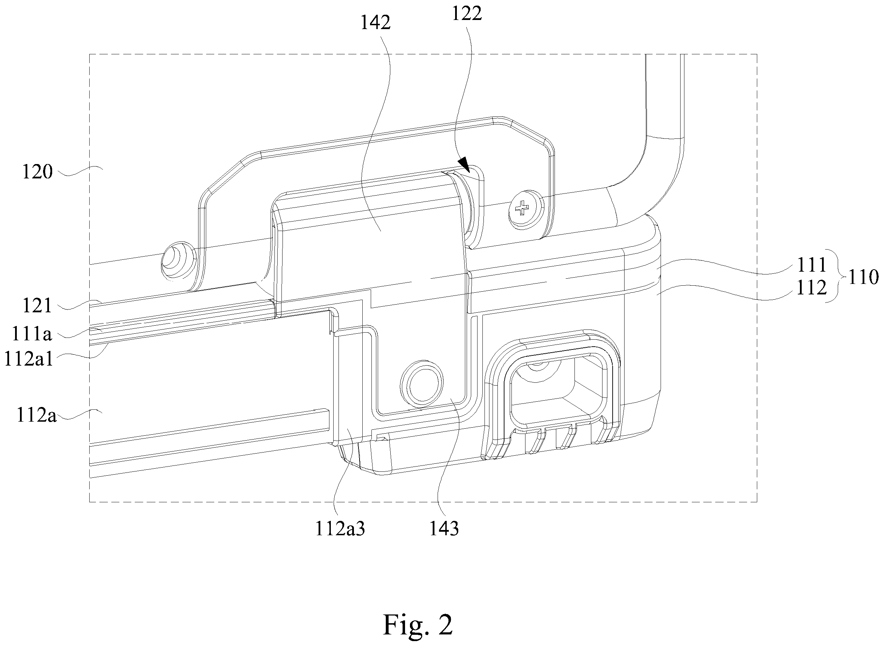

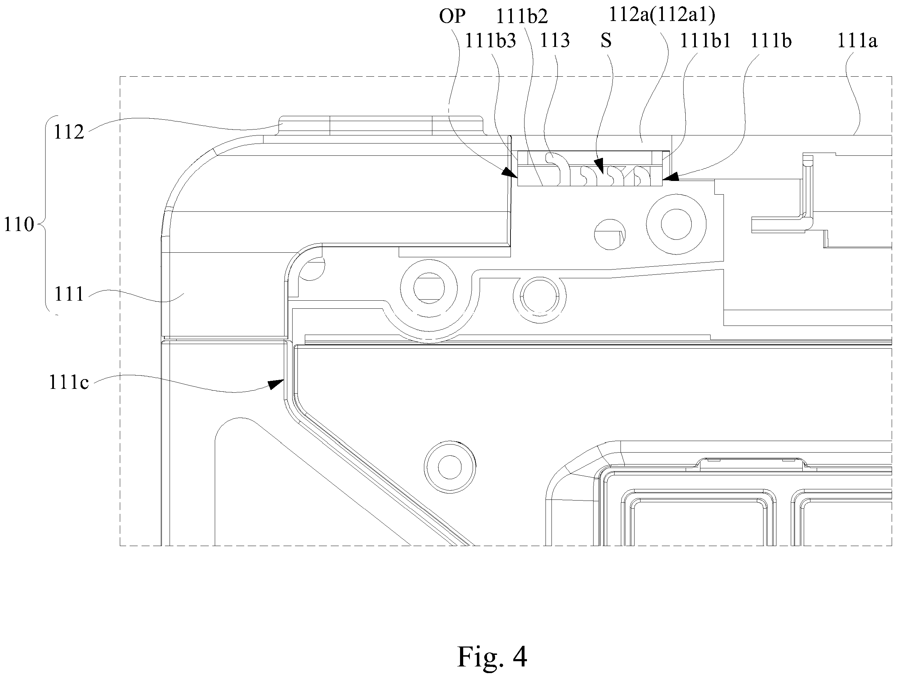

Reference is made to Fig. 2, Fig. 3, and Fig. 4. Fig. 2 is a partial perspective view of the electronic device 100 in Fig. 1. Fig. 3 is another partial perspective view of the electronic device 100 in Fig. 1, in which the cover 140 is removed. Fig. 4 is a top view of the first component 110 in Fig. 1. As shown in Fig. 2 to Fig. 4, the hinge device 130 is connected to the first component 110 and the second component 120, so that the first component 110 and the second component 120 can be flipped relative to each other. In detail, the first component 110 has an open slot 111c. The open slot 111c is opened on a surface of the first component 110 for the second component 120 to cover. The hinge device 130 is fixed to the first component 110 via the open slot 111c (for example, by screw fastening). The cover 140 covers the open slot 111c and covers the hinge device 130, thereby protecting the hinge device 130.

As shown in Fig. 1 and Fig. 2, the cover 140 includes a base portion 141 and a sleeve portion 142. The base portion 141 covers the open slot 111c and is fixed to the first housing 111. The first housing 111 with the open slot 111c can form a relatively complete integrated appearance with the base portion 141 covering the open slot 111c. The sleeve portion 142 is connected to the base portion 141 and is sleeved onto a portion (for example, a rotating shaft) of the hinge device 130 exposed outside the first component 110.

As shown in Fig. 1 to Fig. 3, the first component 110 of the electronic device 100 includes a first housing 111 and a second housing 112 connected to each other. The first housing 111 is an upper housing of the first component 110 and is provided with the keyboard device. The second housing 112 is a lower housing of the first component 110. An accommodation space is formed between the first housing 111 and the second housing 112. In addition, an opening OP through which the cables 900 can pass is formed at a junction of an edge 111a of the first housing 111 and the second housing 112. In other words, a part of the opening OP is formed on the edge 111a of the first housing 111, and can be formed when the first housing 111 and the second housing 112 are assembled. Through the structural configuration that the opening OP does not occupy a middle area of the first housing 111, the planning and utilization in the accommodation space S and of the first housing 111 can be effectively improved.

For example, two ends of the cables 900 can be respectively connected to the electronic components (such as a circuit board) inside the first component 110 and the electronic components (such as a display panel) inside the second component 120 for signal and/or power transmission. Generally speaking, the end of the cables 900 that enters the accommodation space S of the first component 110 is provided with a wire end connector, and the wire end connector is configured to be plugged into a socket-end connector on the circuit board.

Based on the aforementioned structural configurations, during assembly, as shown in Fig. 3, in order to allow the cables 900 to enter the accommodation space S between the first housing 111 and the second housing 112, the cables 900 can be first abutted against a portion of the edge 111a of the first housing 111 forming a part of the opening OP, and then the first housing 111 and the second housing 112 are assembled. In this way, the cables 900 of various sizes can enter the accommodation space S without being folded, thereby effectively reducing the risk of damage to the cables 900.

As shown in Fig. 2 and Fig. 3, the second component 120 has a recess 122. The recess 122 is inwardly formed from an edge 121 of the second component 120 (e.g., the edge 121 of the second component 120 adjacent to the first component 110). The cables 900 and the rotating shaft of the hinge device 130 can respectively enter the interior of the second component 120 through two opposite inner wall surfaces of the recess 122.

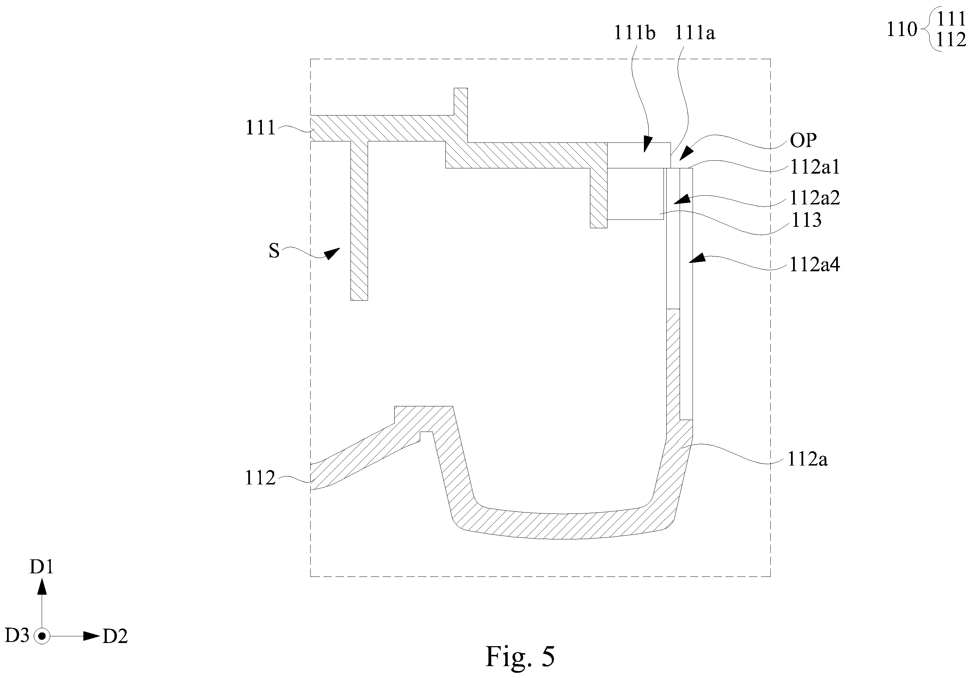

Reference is made to Fig. 5. Fig. 5 is a partial cross-sectional view of the first component 110 in Fig. 3 taken along a cutting line 5-5. As shown in Fig. 3 and Fig. 5, the edge 111a of the first housing 111 has a recess 111b. The recess 111b defines a part of an outline of the opening OP. For example, the first housing 111 and the second housing 112 are stacked and assembled in a direction D1, the recess 111b is inwardly formed from the edge 111a in a direction D2 perpendicular to the direction D1, the edge 111a extends along a direction D3 perpendicular to the direction D1 and the direction D2, but the present disclosure is not limited thereto.

As shown in Fig. 3 and Fig. 5, the second housing 112 includes a sidewall 112a. The opening OP is formed at a junction of the edge 111a of the first housing 111 and the sidewall 112a. Specifically, the sidewall 112a has a top surface 112a1. The top surface 112a1 is partially covered by the first housing 111. The top surface 112a1 has a recess 112a2 not covered by the first housing 111. The recess 112a2 defines a part of an outline of the opening OP. In other words, the outline of the opening OP is jointly defined by the recess 111b on the edge 111a of the first housing 111 and the recess 112a2 on the sidewall 112a of the second housing 112. For example, the recess 112a2 is inwardly formed from the top surface 112a1 of the sidewall 112a in the direction D1, but the present disclosure is not limited thereto.

It can be seen from this that the opening OP extending along the direction D1 and the direction D2 also means that the opening OP is provided at a corner of the first component 110, so the planning and utilization in the accommodation space S can be effectively improved.

As shown in Fig. 3 and Fig. 5, the electronic device 100 further includes a plurality of a plurality of cable management structures 113. The cable management structures 113 are disposed in the opening OP and configured to be respectively connected to the cables 900. The cable management structures 113 are disposed on the edge 111a of the first housing 111. In other words, the cable management structures 113 are disposed in the recess 111b on the edge 111a.

In detail, as shown in Fig. 4, the recess 111b is U-shaped and has three inner end surfaces 111b1, 111b2, and 111b3. The inner end surface 111b2 is connected between the inner end surfaces 111b1 and 111b3. In the embodiment shown in Fig. 4, the cable management structures 113 are disposed on the inner end surface 111b2 and are sequentially arranged along the edge 111a of the first housing 111 (i.e., along the direction D3 in Fig. 3), but the present disclosure is not limited thereto. In practical applications, the cable management structures 113 may be flexibly disposed on at least one of the inner end surfaces 111b1, 111b2, and 111b3.

As shown in Fig. 4, each of the cable management structures 113 is hook-shaped, and the cable management structures 113 are bent in the same direction (such as bending to the left in Fig. 4). Specifically, there is a gap between adjacent two of the cable management structures 113. The gap has a narrowed appearance, that is, an end of the gap away from the inner end surface 111b2 has a narrower entrance. Therefore, when a cable 900 enters the gap through a narrow entrance, the narrow entrance may increase the difficulty for the cable 900 to escape from the gap.

In some embodiments, in addition to being fixed to the first housing 111, the cover 140 may also be further fixed to the second housing 112. In this way, the cover 140 can further increase the assembly stability between the first housing 111 and the second housing 112. Specifically, as shown in Fig. 2 and Fig. 3, the cover 140 has a fixing portion 143. The fixing portion 143 is connected to a side of the sleeve portion 142 away from the base portion 141. The fixing portion 143 is fixed to an outer wall surface 112a3 of the sidewall 112a.

Furthermore, the outer wall surface 112a3 of the sidewall 112a has a recess 112a4. The recess 112a4 is inwardly formed from the outer wall surface 112a3 of the sidewall 112a (i.e., inwardly formed along the direction D2). The fixing portion 143 is fixed to the sidewall 112a in the recess 112a4. In this way, as shown in Fig. 2, a surface of the fixing portion 143 can be made substantially flush with the outer wall surface 112a3, so that the cover 140 having the fixing portion 143 and the sidewall 112a of the second housing 112 can form a relatively complete integrated appearance effect.

According to the foregoing recitations of the embodiments of the disclosure, it can be seen that in the electronic device of the present disclosure, the opening for the cables to pass through is provided at the junction of the edge of the first housing and the second housing. That is, the opening is formed on the edge of the first housing and can be formed when the first housing and the second housing are assembled. In this way, the planning and utilization in the accommodation space and of the first housing can be effectively improved. In addition, during assembly, in order to allow the cables to enter the accommodation space between the first housing and the second housing, the cables can be first abutted against the opening formed on the edge of the first housing, and then the first housing and the second housing are assembled. In this way, cables of various sizes can enter into the accommodation space without being folded, thereby effectively reducing the risk of cable damage. In addition, the cable management structures provided in the opening can neatly and fixedly arrange the cables to avoid the clutter of stacking/interlacing of the cables, thereby preventing assembly defects such as assembly crimping, misaligning, upper housing bulging, and etc.

## Claims

1. An electronic device (100) with a plurality of cables (900), the electronic device (100) comprising:
a first component (110) comprising a first housing (111) and a second housing (112) connected to each other, an accommodation space (S) being formed between the first housing (111) and the second housing (112), and an opening (OP) being formed at a junction of an edge (111a) of the first housing (111) and the second housing (112); and
a second component (120) connected to the first component (110);
wherein the opening (OP) is configured for the cables (900) to pass through so that the cables (900) enter the accommodation space (S), wherein two ends of the cables (900) are respectively connected to electronic components inside the first component (110) and to electronic components inside the second component (120) for signal and/or power transmission.

2. The electronic device (100) of claim 1, further comprising a plurality of cable management structures (113), wherein the cable management structures (113) are disposed in the opening (OP) and configured to be respectively connected to the cables (900).

3. The electronic device (100) of claim 2, wherein the cable management structures (113) are disposed on the edge (111a) of the first housing (111).

4. The electronic device (100) of claim 3, wherein the cable management structures (113) are sequentially arranged along the edge (111a) of the first housing (111).

5. The electronic device (100) of claim 2, wherein the edge (111a) of the first housing (111) has a recess (111b), the recess (111b) defines a part of an outline of the opening (OP), and the cable management structures (113) are located in the recess (111b).

6. The electronic device (100) of claim 1, wherein the second housing (112) comprises a sidewall (112a), and the opening (OP) is formed at a junction of the edge (111a) of the first housing (111) and the sidewall (112a).

7. The electronic device (100) of claim 6, wherein a top surface (112a1) of the sidewall (112a) has a recess (112a2), and the recess (112a2) defines a part of an outline of the opening (OP).

8. The electronic device (100) of claim 6, further comprising a cover (140), wherein the cover (140) covers the opening (OP), an outer wall surface (112a3) of the sidewall (112a) has a recess (112a4), the cover (140) has a fixing portion (143), and the fixing portion (143) is fixed to the sidewall (112a) in the recess (112a4).

9. The electronic device (100) of claim 8, wherein a surface of the fixing portion (143) is substantially flush with the outer wall surface (112a3).

10. The electronic device (100) of claim 1, further comprising:
a hinge device (130), wherein the first component (110) and the second component (120) are connected to each other through the hinge device (130); and
a cover (140) covering the hinge device (130) and the opening (OP).

11. An electronic device (100) according to any one of the preceding claims, wherein :
said first component is a host body (110)
said second component is a display (120) connected to the host body;
said electronic device (100) further comprising a plurality of cables (900) passing through the opening (OP) to enter the accommodation space (S).

## Patentansprüche

1. Elektronische Vorrichtung (100) mit mehreren Kabeln (900), wobei die elektronische Vorrichtung (100) Folgendes umfasst:
eine erste Komponente (110), die ein erstes Gehäuse (111) und ein zweites Gehäuse (112), die miteinander verbunden sind, einen Aufnahmeraum (S), der zwischen dem ersten Gehäuse (111) und dem zweiten Gehäuse (112) ausgebildet ist, und eine Öffnung (OP), die an einer Verbindungsstelle einer Kante (111a) des ersten Gehäuses (111) und des zweiten Gehäuses (112) ausgebildet ist, umfasst; und
eine zweite Komponente (120), die mit der ersten Komponente (110) verbunden ist;
wobei die Öffnung (OP) dazu konfiguriert ist, dass die Kabel (900) dadurch verlaufen, so dass die Kabel (900) in den Aufnahmeraum (S) eintreten, wobei zwei Enden der Kabel (900) jeweils mit elektronischen Komponenten innerhalb der ersten Komponente (110) und mit elektronischen Komponenten innerhalb der zweiten Komponente (120) zur Signal- und/oder Energieübertragung verbunden sind.

2. Elektronische Vorrichtung (100) nach Anspruch 1, die ferner mehrere Kabelverwaltungsstrukturen (113) umfasst, wobei die Kabelverwaltungsstrukturen (113) in der Öffnung (OP) angeordnet und dazu konfiguriert sind, jeweils mit den Kabeln (900) verbunden zu werden.

3. Elektronische Vorrichtung (100) nach Anspruch 2, wobei die Kabelverwaltungsstrukturen (113) an der Kante (111a) des ersten Gehäuses (111) angeordnet sind.

4. Elektronische Vorrichtung (100) nach Anspruch 3, wobei die Kabelverwaltungsstrukturen (113) nacheinander entlang der Kante (111a) des ersten Gehäuses (111) angeordnet sind.

5. Elektronische Vorrichtung (100) nach Anspruch 2, wobei die Kante (111a) des ersten Gehäuses (111) eine Aussparung (111b) aufweist, die Aussparung (111b) einen Teil eines Umrisses der Öffnung (OP) definiert und sich die Kabelverwaltungsstrukturen (113) in der Aussparung (111b) befinden.

6. Elektronische Vorrichtung (100) nach Anspruch 1, wobei das zweite Gehäuse (112) eine Seitenwand (112a) umfasst und die Öffnung (OP) an einer Verbindungsstelle der Kante (111a) des ersten Gehäuses (111) und der Seitenwand (112a) ausgebildet ist.

7. Elektronische Vorrichtung (100) nach Anspruch 6, wobei eine obere Fläche (112a1) der Seitenwand (112a) eine Aussparung (112a2) aufweist und die Aussparung (112a2) einen Teil eines Umrisses der Öffnung (OP) definiert.

8. Elektronische Vorrichtung (100) nach Anspruch 6, die ferner eine Abdeckung (140) umfasst, wobei die Abdeckung (140) die Öffnung (OP) abdeckt, eine Außenwandfläche (112a3) der Seitenwand (112a) eine Aussparung (112a4) aufweist, die Abdeckung (140) einen Befestigungsabschnitt (143) aufweist und der Befestigungsabschnitt (143) an der Seitenwand (112a) in der Aussparung (112a4) befestigt ist.

9. Elektronische Vorrichtung (100) nach Anspruch 8, wobei eine Fläche des Befestigungsabschnitts (143) im Wesentlichen bündig mit der Außenwandfläche (112a3) ist.

10. Elektronische Vorrichtung (100) nach Anspruch 1, die ferner Folgendes umfasst:
eine Scharniervorrichtung (130), wobei die erste Komponente (110) und die zweite Komponente (120) durch die Scharniervorrichtung (130) miteinander verbunden sind; und
eine Abdeckung (140), die die Scharniervorrichtung (130) und die Öffnung (OP) abdeckt.

11. Elektronische Vorrichtung (100) nach einem der vorhergehenden Ansprüche, wobei:
die erste Komponente ein Host-Körper (110) ist;
die zweite Komponente eine Anzeige (120) ist, die mit dem Host-Körper verbunden ist;
die elektronische Vorrichtung (100) ferner mehrere Kabel (900) umfasst, die durch die Öffnung (OP) verlaufen, um in den Aufnahmeraum (S) einzutreten.

## Revendications

1. Dispositif électronique (100) avec une pluralité de câbles (900), le dispositif électronique (100) comprenant :
un premier composant (110) comprenant un premier boîtier (111) et un second boîtier (112) qui sont connectés l'un à l'autre, un espace de logement (S) étant formé entre le premier boîtier (111) et le second boîtier (112), et une ouverture (OP) étant formée au niveau d'une jonction d'un bord (111a) du premier boîtier (111) et du second boîtier (112) ; et un second composant (120) connecté au premier composant (110) ;
lequel ouverture (OP) est configurée pour permettre aux câbles (900) de passer afin que les câbles (900) pénètrent dans l'espace de logement (S), lequel deux extrémités des câbles (900) sont respectivement connectées à des composants électroniques à l'intérieur du premier composant (110) et à des composants électroniques à l'intérieur du second composant (120) pour la transmission de signal et/ou la transmission d'énergie.

2. Dispositif électronique (100) selon la revendication 1, comprenant en outre une pluralité de structures de gestion de câbles (113), lesquelles structures de gestion de câbles (113) sont disposées dans l'ouverture (OP) et configurées pour être respectivement connectées aux câbles (900).

3. Dispositif électronique (100) selon la revendication 2, dans lequel les structures de gestion de câbles (113) sont disposées sur le bord (111a) du premier boîtier (111).

4. Dispositif électronique (100) selon la revendication 3, dans lequel les structures de gestion de câbles (113) sont agencées de manière séquentielle le long du bord (111a) du premier boîtier (111).

5. Dispositif électronique (100) selon la revendication 2, dans lequel le bord (111a) du premier boîtier (111) présente un renfoncement (111b), le renfoncement (111b) définissant une partie d'un contour de l'ouverture (OP), et les structures de gestion de câbles (113) sont situées dans le renfoncement (111b).

6. Dispositif électronique (100) selon la revendication 1, dans lequel le second boîtier (112) comprend une paroi latérale (112a), et l'ouverture (OP) est formée au niveau d'une jonction du bord (111a) du premier boîtier (111) et de la paroi latérale (112a).

7. Dispositif électronique (100) selon la revendication 6, dans lequel une surface supérieure (112a1) de la paroi latérale (112a) présente un renfoncement (112a2), et le renfoncement (112a2) définit une partie d'un contour de l'ouverture (OP).

8. Dispositif électronique (100) selon la revendication 6, comprenant en outre un couvercle (140), lequel couvercle (140) recouvre l'ouverture (OP), une surface de paroi extérieure (112a3) de la paroi latérale (112a) présentant un renfoncement (112a4), le couvercle (140) ayant une partie de fixation (143), et la partie de fixation (143) étant fixée à la paroi latérale (112a) dans le renfoncement (112a4).

9. Dispositif électronique (100) selon la revendication 8, dans lequel une surface de la partie de fixation (143) est sensiblement à fleur avec la surface de paroi extérieure (112a3).

10. Dispositif électronique (100) selon la revendication 1, comprenant en outre :
un dispositif de charnière (130), dans lequel le premier composant (110) et le second composant (120) sont connectés l'un à l'autre par l'intermédiaire du dispositif de charnière (130) ; et
un couvercle (140) recouvrant le dispositif de charnière (130) et l'ouverture (OP).

11. Dispositif électronique (100) selon l'une quelconque des revendications précédentes, dans lequel :
ledit premier composant est un corps principal (110)
ledit second composant est un affichage (120) connecté au corps principal ;
ledit dispositif électronique (100) comprenant en outre une pluralité de câbles (900) passant à travers l'ouverture (OP) pour pénétrer dans l'espace de logement (S).
